# EUROPEAN PATENT SPECIFICATION

(11) **EP 3 783 265 B1**
(45) Date of publication and mention of the grant of the patent: **05.06.2024**
(21) Application number: 20201471.8
(22) Date of filing: 19.02.2018
(51) Int. Cl.: F24C 3/12, F24C 7/08, G05G 1/08, G05G 5/05, G06F 3/0362, F16D 3/18, A47J 31/44

(54) **KNOB ASSEMBLY WITH DISPLAY DEVICE AND COOKING APPARATUS HAVING KNOB ASSEMBLY**
KNOPFANORDNUNG MIT ANZEIGEVORRICHTUNG UND KOCHVORRICHTUNG MIT KNOPFANORDNUNG
ENSEMBLE BOUTON COMPRENANT UN DISPOSITIF D'AFFICHAGE ET APPAREIL DE CUISSON COMPORTANT UN ENSEMBLE BOUTON

(30) Priority: 17.02.2017 KR 20170021879; 17.02.2017 KR 20170021878; 22.02.2017 KR 20170023774; 24.07.2017 KR 20170093734; 26.07.2017 KR 20170094806; 06.12.2017 KR 20170167073
(43) Date of publication of application: 24.02.2021
(62) Divisional of application: 18157306.4
(73) Proprietor: LG Electronics Inc., Yeongdeungpo-gu Seoul 07336 (KR)
(72) Inventor: Ha, Yeonsik, Seoul 08592 (KR); Cho, Seong Sik, Seoul 08592 (KR)
(74) Representative: Ter Meer Steinmeister & Partner

(56) References cited:
- EP-A1- 1 962 167
- WO-A1-2010/134040
- US-A- 2 738 758
- US-A1- 2004 070 574
- US-A1- 2016 097 541
- US-A1- 2016 333 990

## Description

### 1. Technical field

A knob assembly with a display and a cooking apparatus having a knob assembly are disclosed herein.

### 2. Background

A cooking apparatus is a kind of home appliance that cooks food or other items (hereinafter "food") and may be installed or provided in a kitchen space. Such cooking apparatuses may be classified into various categories according to heat source, form or shape thereof, and type of fuel used in the cooking apparatus. The cooking apparatus may be classified as an open-type cooking apparatus and/or a closed-type cooking apparatus according to a space in which food is placed. The closed-type cooking apparatus may include an oven, or a microwave oven, for example, and the open-type cooking apparatus may include a cooktop, or a hob, for example.

The closed-type cooking apparatus may be a cooking apparatus configured to enclose a space in which food may be placed and may heat the enclosed space to cook the food. The open-type cooking apparatus may be a cooking apparatus in which food or a vessel containing food may be placed in an open space and may be configured to heat the food or the vessel to cook the food.

The closed-type cooking apparatus may be provided with a cooking chamber, in which the food may be placed and which may be a space which is enclosed when the food is cooked. Food may be cooked in the cooking chamber. A heat source may be provided in a space inside or outside of the cooking chamber to heat the cooking chamber.

A composite cooking apparatus may be provided in which a closed-type cooking apparatus and an open-type cooking apparatus may be installed and a plurality of heat sources may be combined to simultaneously cook a plurality of foods. In the composite cooking apparatus, the open-type cooking apparatus may be located above the closed-type cooking apparatus. A plurality of heaters or burners may be installed at or provided on the open-type cooking apparatus so that the open-type cooking apparatus may be able to simultaneously cook a plurality of foods.

A user may use the closed-type cooking apparatus when cooking food, such as, for example, barbecued food or baked goods or grilled food, and may use the open-type cooking apparatus which is exposed above the closed-type cooking apparatus when cooking food which may be accommodated and heated in a vessel or container. The open-type cooking apparatus may be a gas range, and such an open-type cooking apparatus may cook food using a flame generated when a gas burns.

A variety of methods may be provided to enable a user to adjust a strength of a flame of such an open-type cooking apparatus. A method of adjusting a power level by using a knob, which may rotate around a predetermined rotational shaft, to adjust a rotational amount of the knob may be widely used. The knob may be connected to a valve that controls a flow rate of a gas to mechanically control opening and closing amounts of the valve. A method of electronically measuring a rotational amount of the knob and electronically controlling the opening and closing amounts of the valve based on the measured result may also be applied to the knob. Knob assemblies for cooking devices are known from WO2010/134040 A1 and EP 1962167 A1.

A cooking apparatus or composite cooking apparatus including an oven may be provided with a display or module which may display a timer time, and an operating state, for example. In an oven required to cook food for a long time, a timer function may be necessary, a dial-type timer may be employed in the oven, and a structure capable of displaying status information of the cooking apparatus through a separate display may be provided.

Even though the cooking apparatus is provided with the same cooktop, the display may not be necessary when only a gas range is provided at the cooking apparatus, but in the composite cooking apparatus, the display may be needed so as to display various information. However, information displayed by individual products may be different, and designs of a screen of a display, and a user interface (UI), for example, may be separately developed.

### SUMMARY

The objects are solved by the featues of the independent claim. Preferred embodiments are described by the dependent claims.

According to the invention, a knob assembly comprises a knob configured to adjust a power level of a power source; and a knob ring configured to surround a periphery of the knob, configured to be rotatable independent of the knob, and provided with a display. The knob is coupled to an adjustment shaft, e.g. for adjusting a power level of a burner or cooktop.

The knob ring may be moved from an initial position to a second position by an external force. The knob ring may return to the initial position when the external force is released. A knob ring encoder may be configured to detect a manipulation of the knob ring. A knob encoder may be provided and configured to detect a manipulation of the knob. An actuating member may be coupled to the knob ring. A support frame may support an outer circumferential surface of the actuating member. A fixing frame may be coupled to the support frame and configured to prevent the actuating member from escaping from the support frame. A circular plate may be configured to be inserted between the knob ring and a panel of an apparatus on which the knob assembly is provided. A bearing shell may be provided with a cylinder inserted between the actuating member and the support frame. The knob ring supports the adjustment shaft at two or more points thereof. The knob ring includes a knob ring main body configured to form an exterior appearance thereof; a rear surface plate coupled to a rear surface of the knob ring main body and provided with a support hole configured to support the adjustment shaft which passes through the support hole; and a support pipe coupled to the rear surface plate and configured to support the adjustment shaft. The support pipe includes a flange coupled to the rear surface plate; and a tapered pipe formed to extend from the flange and provided with a cap configured to support the adjustment shaft. The display may be configured to display a power level and a timer time. The power level displayed on the display may be detected and displayed based on a rotational amount of the knob. The timer time displayed on the display may be detected and displayed based on manipulation of the knob ring. The display may be coupled to the knob ring main body through a display housing. A finishing cap may be coupled to an outside of the display housing. The finishing cap may be made of a transparent or semitransparent material to allow information displayed on the display to be visible. The display may include a portion for displaying a power level and a portion for displaying a timer time. If the timer time is not set, only the power level may be displayed. If the timer time is set, the power level may be displayed for a first predetermined period of time and then the timer time may be displayed for a second predetermined period of time. The power level may be displayed with a red color and the timer time is displayed with a white color or a blue color.

According to another aspect, a cooking apparatus is provided, comprising a knob assembly according to any one of the herein described embodiments.

The information of the cooking apparatus may include the power level of the at least one burner and a timer time. The display may be an electronic display including different lighting devices with different colors.

### BRIEF DESCRIPTION OF THE DRAWINGS

Embodiments will be described in detail with reference to the following drawings in which like reference numerals refer to like elements, and wherein:
FIG. 1 is a view of a cooking apparatus provided with a separate display;
FIG. 2 is a view of a front surface of a knob assembly according to an embodiment;
FIG. 3 is a side view of a cross section of the knob assembly of FIG. 2;
FIG. 4 is an exploded view of a components of the knob assembly of FIG. 2;
FIG. 5 is a cross-sectional view of the knob assembly of FIG. 2;
FIG. 6 is a view of a rear surface of the knob assembly of FIG. 2;
FIG. 7 and FIG. 8 are views of different manipulation states of a knob ring of the knob assembly of FIG. 2;

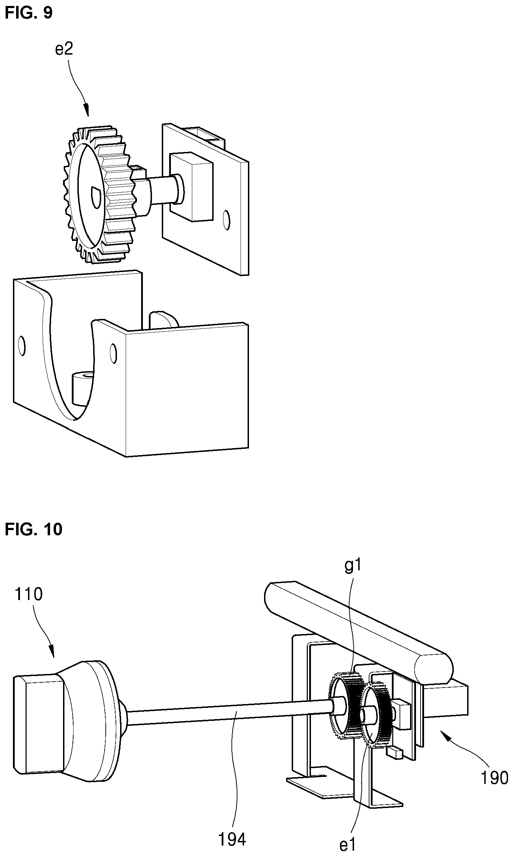

FIG. 9 is a view of a knob ring encoder of the knob assembly of FIG. 2;
FIG. 10 is a view of a knob encoder of the knob assembly of FIG. 2;
FIG. 11 is an exploded perspective view of the knob ring of FIG. 2; and
FIG. 12 is an exploded perspective view of a rear surface of components of the knob ring of FIG. 2.

### DETAILED DESCRIPTION

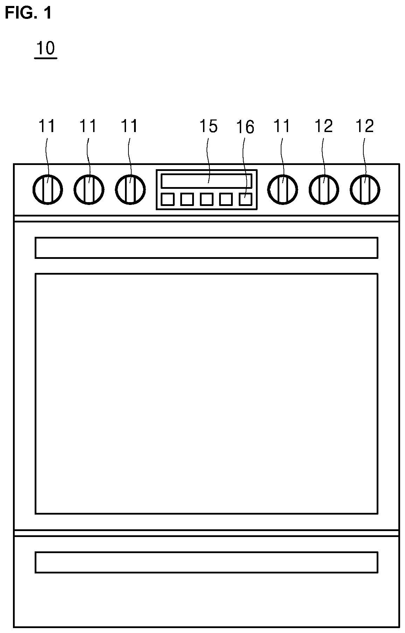

Referring to FIG. 1, a cooking apparatus 10 may be provided with an oven which may include knobs 11 configured to adjust a power level, knobs 12 configured to adjust a timer time, a display or module 15 configured to display a status of the cooking apparatus 10, and switches 16 configured to each perform a separate operation or manipulation, at a front surface of the cooking apparatus 10. As the oven may be required to cook food for a long time, a timer that sets an operating time of the oven may be necessary. For unity of design and convenience of manipulation, a rotary switch may be applied to the knob 11 configured to adjust a power level and the knob 12 configured to adjust a timer time.

The display 15 may display an operation or manipulation state, for example, of the cooking apparatus 10. Information displayed on the display 15 may include an output, for example, a temperature of a burner, the timer time, and a cooking mode of an automatic cooking function, for example. However, if a configuration of a flame hole of the cooking apparatus 10 is changed or a specification of a product is changed, information or a user interface (UI), which may be displayed on the display 15, may be changed, and the display 15 may be separately designed.

As the knob 11 configured to adjust power level and the knob 12 configured to adjust a timer time may have a same or similar shape, the knobs 11 and 12 may be superior in terms of design, but in terms of user convenience, it may be difficult for a user to recognize which knob performs which function. To resolve the above-described problems, a knob assembly is provided that includes a knob handle configured to adjust a power level of a cooking apparatus and a knob ring configured to adjust a timer time, for example, of the cooking apparatus. A display is provided at the knob ring so that the knob assembly may be easily used by a user and may have a superior design and an advantage in terms of component sharing.

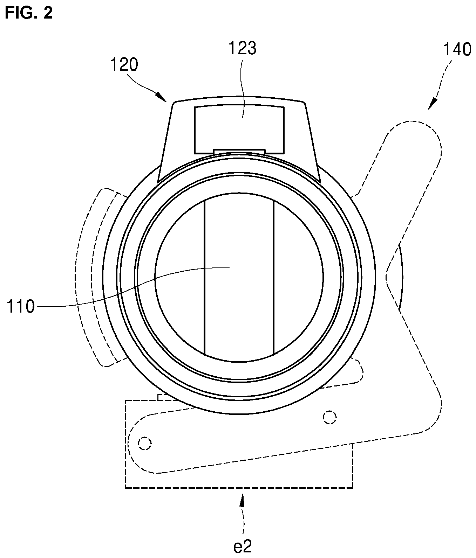

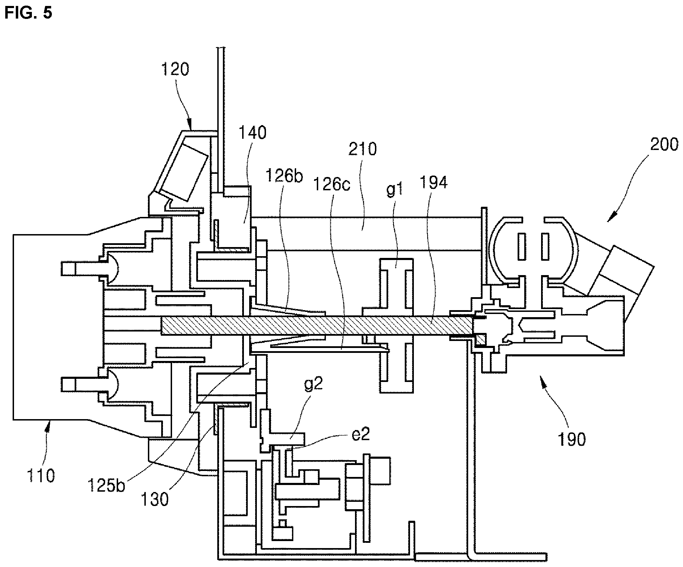

Referring to FIG. 2 through FIG. 5, a knob handle or knob 110 is connected to an adjustment shaft 194 of a power level adjuster or heat adjuster 190 configured to adjust a power level. The knob handle 110 may include a non-returning rotary switch such that the non-returning rotary switch may not return to an initial position once it is rotated by an external force. The knob handle 110 may be maintained at a position at which a user rotates the knob handle 110, and allow an output of power or flame at a corresponding flame hole according to a rotational angle of the knob handle 110. That is, a position of the knob handle 110 may correspond to how much power is released from a heat source of the cooking apparatus. For example, in a case of a gas burner, the power level adjuster 190 may be a valve, and in the case of a microwave oven or an induction range, the power level adjuster 190 may be an output adjuster, such as a variable resistor, in order to adjust an output thereof.

The knob handle 110 may have a circular shape and may be provided with a protruding handle. The protruding handle may be bar-shaped, but a shape of the handle may be variously modified and embodiments are not limited thereto. The knob handle 110 may be, for example, manufactured of a synthetic resin injection material or may be manufactured by processing a metal material. A material and shape of the knob handle 110 may be variously changed.

A knob ring 120 may be provided at an outer circumferential surface of the knob handle 110 to improve an exterior appearance of a periphery of the knob handle 110. The knob ring 120 may support the knob handle 110 and may finish the exterior appearance of the periphery of the knob handle 110 to improve a quality of the exterior appearance.

The knob ring 120 may confine or restrict a position of the knob handle 110. The power level adjuster 190 may be applied or coupled to the adjustment shaft 194, and if the knob handle 110 is coupled to only the adjustment shaft 194, the knob handle 110 may arbitrarily move in different directions. The knob ring 120 according to embodiments may confine or restrict the position of the knob handle 110 and may allow the knob handle 110 to be maintained at a certain or set position.

The knob ring 120 may include a timer manipulation switch and a display that displays a timer time and power level. The knob ring 120 may rotate independent of the knob handle 110, the timer time may be set through a manipulation or rotation of the knob ring 120, and a display 123 is provided at the knob ring 120 so that the timer time and the power level may be displayed on the display 123.

A knob encoder e1 may be provided to detect a rotational amount of the knob handle 110, and a knob ring encoder e2 may be provided to detect a rotational amount of the knob ring 120. The knob encoder e1 may detect a rotation amount of a gear g1 coupled to the adjustment shaft 194, and the knob ring encoder e2 may sense or detect rotation of a knob ring gear or second gear g2 provided at an actuating member 150.

The knob handle 110 and the knob ring 120 may be provided at or on an outside of a front panel c of the cooking apparatus 10. The knob handle 110 and the knob ring 120 may be provided to pass through a space or hole h in the front panel c of the cooking apparatus 10. The power level, and the timer time, for example, may be displayed on the display 123. The power level displayed on the display 123 may be detected and displayed based on the rotational amount of the knob handle 110, and the timer time displayed on the display 123 may be detected and displayed based on manipulation of the knob ring 120.

The display 123 may include a portion that displays the power level and a portion that displays the timer time, but the power level and the timer time may be selectively displayed on a single display 123. For example, if the timer time is not set, only the power level may be displayed. If the timer time is set, the power level may be displayed for a predetermined period of time and then the timer time may be displayed for a predetermined period of time.

A user may easily verify or recognize whether a displayed number represents the power level or the timer time by differentiating a light color when the power level is displayed from a light color when the timer time is displayed. For example, the power level may be displayed with a red color and the timer time may be displayed with a white color or a blue color. When both the power level and the timer time are displayed, the power level may be displayed for two seconds and then the timer time may be displayed for a next two seconds.

As described above, when both the power level and the timer time are adjusted and displayed through the knob assembly, a separate display may not be necessary at the front panel c. A structure of such a knob assembly may be applied to both an oven range provided with an oven and a cooktop including only a burner, and may have an advantage in that the knob assembly may be used as a component shared by the oven range and the cooktop.

An actuating member 150 may be coupled to a rear surface of the knob ring 120 and may integrally rotate with the knob ring 120. A rotational amount of the actuating member 150 may be the same as the rotational amount of the knob ring 120. By detecting the rotational amount of the actuating member 150, a manipulation of the knob ring 120 may be detected. The knob ring gear g2 may be provided at the actuating member 150.

A support frame 140 may be coupled to the front panel c to support the knob ring 120. The knob handle 110 and the knob ring 120 may each be coupled at aligned positions on the front panel c, and the front panel c may be made of a metal thin plate material, for example. When the hole h is formed at the front panel c and the knob ring 120 directly rotates with and rubs against the hole h, a problem in that the knob ring 120 may be cut or deformed may occur. Therefore, the support frame 140 may be coupled to and aligned with the hole h formed at the front panel c.

The support frame 140 may be provided with a guide recess corresponding to an outer diameter of the actuating member 150 coupled to the knob ring 120. An outer circumferential surface of the actuating member 150 may be supported by the support frame 140 and rotated to a predetermined position. A position of the knob ring 120 may be determined by the support frame 140, and the support frame 140 may be engaged with the front panel c so that the position of the knob ring 120 may be fixed with respect to the front panel c.

The support frame 140 may surround the outer circumferential surface of the actuating member 150 and may support the actuating member 150 to be rotatable around a predetermined shaft. The support frame 140 may be engaged with a guide rod 210 and a burner frame 200 to which the power level adjuster 190 may be fixed. The guide rod 210 may fix or couple the burner frame 200 to the support frame 140, and the support frame 140 may be fixed at a predetermined position with respect to the burner frame 200 via the guide rod 210.

A fixing frame 160 may be engaged with and fixed to the support frame 140 via a fastener, such as a screw, for example, and may prevent the actuating member 150 from moving or escaping from the fixing frame 160 in a rearward direction toward an inside of the cooking apparatus 10. The fixing frame 160 may confine or restrict a rotational range of the actuating member 150 and restrict the actuating member 150 and the knob ring 120 to be rotatable only within a predetermined angle range.

The fixing frame 160 may be formed in a shape which is similar to a bow tie such that an angle between portions corresponding to wings of the bow tie may restrict the actuating member 150 to be rotatable within the predetermined angle range and a portion connecting the wings may prevent the actuating member 150 from escaping in the rearward direction.

A bearing shell 130 may be a bearing that allows the knob ring 120 to be smoothly manipulated. The bearing shell 130 may be provided with a cylindrical-shaped cylinder 134, and a circular plate 132 bent from the cylinder 134 to protrude in a radial direction. The cylinder 134 may be inserted between the outer circumferential surface of the actuating member 150 coupled to the knob ring 120 and an inner circumference surface of the support frame 140, and may reduce friction between the actuating member 150 and the support frame 140.

The circular plate 132 may be inserted between the front panel c and the knob ring 120 to reduce friction therebetween. The circular plate 132 may separate the knob ring 120 from the front panel c by a predetermined gap and may reduce generation of scratches on the front panel c due to the manipulation of the knob ring 120.

The knob ring 120 according to embodiments may provide a return or restoring type manipulation structure. The return type manipulation structure may be a structure that allows the knob ring 120 to be manipulated in a clockwise direction or a counterclockwise direction within a predetermined angle range due to an external force, and may return or restore the knob ring 120 to an original position thereof when the external force is released therefrom.

Restoring springs s1 and s2 may provide a restoring force which returns the knob ring 120 to the original position thereof. The restoring springs s1 and s2 may include a first restoring spring s1 configured to provide a restoring force in the clockwise direction and a second restoring spring s2 configured to provide a restoring force in the counterclockwise direction. When an external force is not applied to the knob ring 120, the elastic force of the first restoring spring s1 may balance with that of the second restoring spring s2 such that the knob ring 120 may be maintained at an initial position thereof.

Both ends of each of the restoring springs s1 and s2 may be fixed to the actuating member 150 and the support frame 140 to which the fixing frame 160 is fixed. The actuating member 150 and the knob ring 120 may integrally rotate such that the knob ring 120 may be maintained at the initial position thereof by elastic forces of the restoring springs s1 and s2, and may be rotated by a predetermined angle in the clockwise or counterclockwise direction. One or a first end of each of the restoring springs s1 and s2 may be connected to an elastic member holder 151 on the actuating member 150, and another or second end of each of the restoring springs s1 and s2 may be connected to a first spring holder 141 of the support frame 140 and a second spring holder 142 of the support frame 140, respectively.

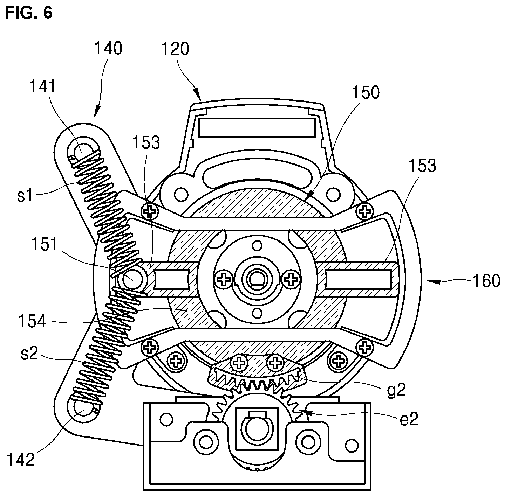

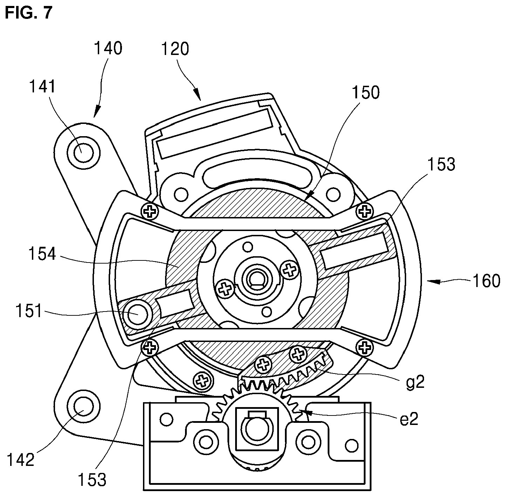

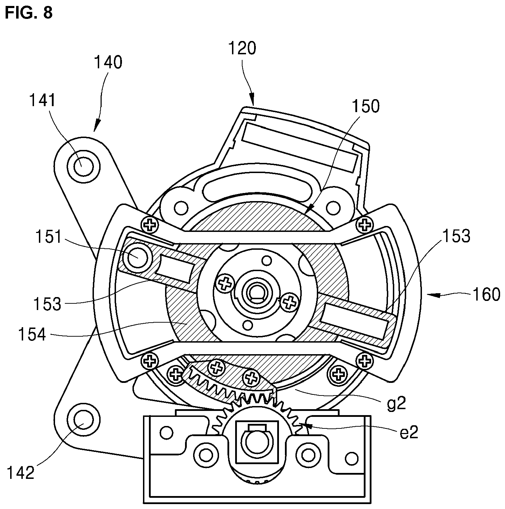

Referring to FIG. 6 through FIG. 8, for convenience of illustration, the front panel c has been omitted from the drawings. The knob handle 110 and the knob ring 120 may be coupled to a front surface side of the front panel c, and the support frame 140, the actuating member 150, and the fixing frame 160 may be coupled to a rear surface side of the front panel c.

The fixing frame 160 may be engaged with the rear surface of the front panel c, and the actuating member 150 may pass through the front panel c to be engaged with the knob ring 120. A rotational center of the actuating member 150 may be provided to coincide with an axial center of the adjustment shaft 194. The actuating member 150 may confine the axial center of the adjustment shaft 194 to be located at a predetermined position with respect to the front panel c. That is, the actuating member 150 may be fixed at the predetermined position with respect to the front panel c, and thus the adjustment shaft 194 may be fixed at an exact position with respect to the front panel c.

The actuating member 150 may be inserted into the support frame 140, may pass through the front panel c, and may partially protrude from the front panel c. A front end of the actuating member 150 may be formed in a cylindrical shape, and the cylindrical portion thereof may protrude from a front surface of the front panel c. The knob ring 120 may be coupled to the actuating member 150 that protrudes from the front surface of the front panel c. The knob ring 120 and the actuating member 150 may be coupled such that the knob ring 120 may be structurally supported by the support frame 140.

The manipulation of the knob ring 120 may be recognized based on rotation of the actuating member 150. As the knob ring 120 is a portion which is exposed to the outside of the front panel c, when an encoder configured to sense the manipulation of the knob ring 120 outside of the front panel c is provided around the knob ring 120, an exterior appearance thereof is not aesthetically pleasing. As the knob ring 120 may be integrally coupled with the actuating member 150, the knob ring encoder e2 may be provided around the actuating member 150 to sense the rotation thereof.

The knob ring gear g2 configured to transmit a rotational angle may be provided at the actuating member 150. The knob ring encoder e2 may be engaged with the knob ring gear g2 and configured to detect a rotational angle of the actuating member 150. The knob ring encoder e2 may be engaged with the knob ring gear g2 and may detect a rotational manipulation signal of the knob ring 120.

The actuating member 150 may be coupled to the pair of restoring springs s1 and s2 that return the actuating member 150 to a predetermined position. The restoring springs s1 and s2 may connect the support frame 140 to the actuating member 150. When the actuating member 150 is manipulated in the counterclockwise direction, the restoring spring s1 may provide the elastic force in the clockwise direction to return the actuating member 150 to the original position thereof. When the actuating member 150 is manipulated in the clockwise direction, the restoring spring s2 may provide the elastic force in the counterclockwise direction to return the actuating member 150 to the original position thereof.

The fixing frame 160 may be provided to prevent the actuating member 150 from escaping or moving toward the rear surface and may enable or allow the actuating member 150 to stably operate. The fixing frame 160 may prevent the actuating member 150 from escaping toward the rear surface by passing through a rear surface of the actuating member 150. The fixing frame 160 may be engaged with the support frame 140. The fixing frame 160 may confine the rotational range of the actuating member 150.

The actuating member 150 may include a actuating member body 154 and may be provided with a wing part or wing 153 that extends out to one side, and the actuating member 150 may have a structure in which the pair of restoring springs s1 and s2 are fixed to the wing 153. When a rotation range of the wing 153 is restricted by the fixing frame 160, a bidirectional rotational angle of the actuating member 150 may be constantly restricted. To more stably confine the rotation of the actuating member 150, the wing 153 may be provided at both sides of the actuating member 150, and the fixing frame 160 may equally restrict rotational ranges of the wings 153 provided at both of the sides.

The knob assembly according to embodiments may adjust a power level through manipulation of the knob handle 110 and may display a timer time through manipulation of the knob ring 120. Accordingly, the knob assembly includes the display 123 provided at the knob ring 120 and may include the knob encoder e1 configured to detect manipulation of the knob handle 110, and the knob ring encoder e2 configured to detect manipulation of the knob ring 120.

The knob ring encoder e2 may be engaged with the knob ring gear g2 of the actuating member 150 to detect rotation of the actuating member 150. The knob ring 120 may be a returning type knob ring and may rotate within a predetermined range when an external force is applied thereto, and the knob ring 120 may return to an original position thereof when the external force is released. For example, the knob ring 120 may be manipulated to increase the timer time by being rotated a predetermined angle in the clockwise direction, and to decrease the timer time by being rotated a predetermined angle in the counterclockwise direction.

The knob handle 110 is connected to the adjustment shaft 194 of the power level adjuster 190. The adjustment shaft 194 of the power level adjuster 190 may be a non-returning type adjustment shaft that maintains a manipulated position, and the knob encoder e1 may detect a rotational amount or a manipulated angle manipulated from a reference position. The knob encoder e1 may be engaged with the gear g1 coupled to the adjustment shaft 194 to detect rotation of the adjustment shaft 194.

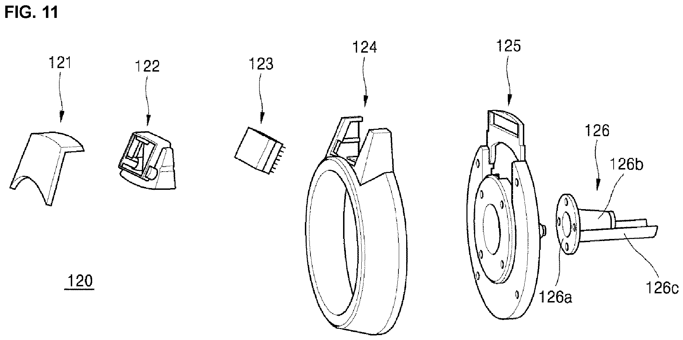

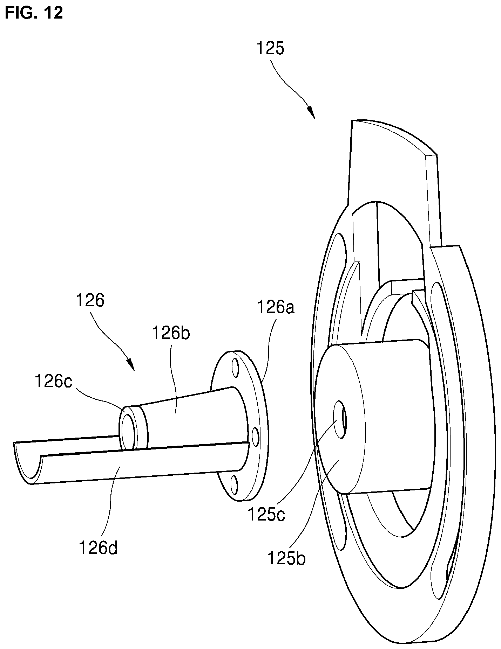

In a cooking apparatus, such as a microwave oven or an induction range, in which a power level is electronically adjusted, the power level adjuster 190 may be configured with a variable resistor, for example, so that a status of the power level adjuster 190 may be detected without separately providing the knob encoder e1. Referring to FIG. 11 and FIG. 12, the knob ring 120 includes a knob ring main body 124 configured to form an exterior appearance thereof, a rear surface plate 125 coupled to a rear surface of the knob ring main body 124, and a support pipe 126 coupled to the rear surface plate 125 and configured to support the adjustment shaft 194.

The rear surface plate 125 may be provided with a rear surface plate body and a support plate 125b configured to enter into an interior of the front panel c and protrude toward an inner side of the cooking apparatus 10. A support hole 125c configured to support the adjustment shaft 194 may be provided at or in the support plate 125b.

The support pipe 126 is coupled to the rear surface plate 125. The support pipe 126 is provided with a flange 126a coupled to the rear surface plate 125, a tapered pipe 126b that extends from the flange 126a, and may be provided with a support rib 126d that extends longer than the tapered pipe 126b. The tapered pipe 126b may have a tapered shape in which a diameter decreases as it extends away from the flange 126a, and a support part or cap 126c configured to support the adjustment shaft 194 is provided at a front end of the tapered pipe 126b.

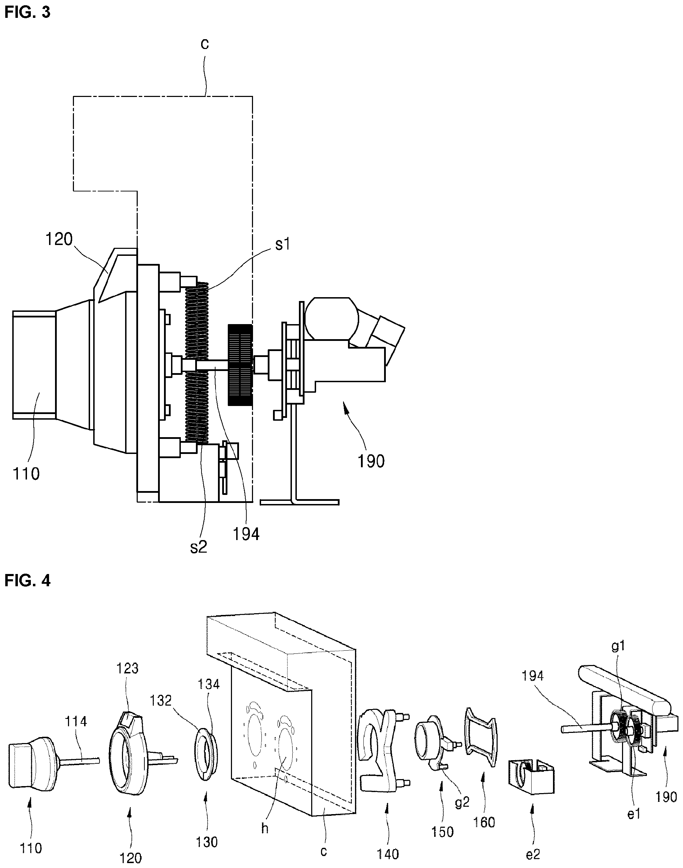

Thus, the adjustment shaft 194 is structurally supported at two points, that is, the support hole 125c and the support cap 126c. In a related art valve structure, an adjustment shaft may be confined to a predetermined position, but as the adjustment shaft 194 may be a power level adjuster, a structure capable of stably supporting the adjustment shaft 194 may be required. The knob ring 120 supports the adjustment shaft 194 at two or more points. The knob ring 120 may support the adjustment shaft 194 at the two or more points as well as a front end of the gear g1 coupled to the adjustment shaft 194. The gear g1 (see FIG. 4) may be configured to transmit a rotational amount of the adjustment shaft 194 to the knob encoder e1, and the gear g1 may be supported on the support rib 126d.

Referring to FIG. 11, the display 123 capable of displaying the power level and timer time is provided at the knob ring 120. The display 123 may be coupled to the knob ring main body 124 through a display housing 122, and a finishing cap 121 may be coupled to an outside of the display housing 122. The finishing cap 121 may be made of, for example, a transparent or semitransparent material to allow information displayed on the display 123 to be visible. The display 123 may be an electronic display, such as, for example, an LCD or LED device, but embodiments are not limited thereto.

Embodiments disclosed herein provide a knob assembly provided with a knob ring, which may be independently manipulated, around a knob handle so that a timer time of a cooking apparatus, such as a cooking time of a corresponding burner or an oven, may be set through a manipulation of the knob ring.

A display is provided at the knob ring, and a power level and a timer time, for example, of a corresponding cooking apparatus may be displayed on the display so that user convenience may be improved. Further, the knob assembly according to embodiments disclosed herein may be applied to a gas range as well as a composite cooking apparatus including an oven range, an induction range, and a microwave oven, for example, so that component sharing in various cooking apparatuses may be provided.

According to embodiments disclosed herein, a knob assembly is provided that includes a knob handle coupled to an adjustment shaft that is configured to adjust power level, and a knob ring configured to surround a periphery of the knob handle, provided to pass through a front panel, configured to be rotatable independent of the knob handle, and provided with a display. The knob ring may have a returning type rotational structure in which the knob ring may return to an initial position thereof when an external force is released.

The knob assembly may further include a knob ring encoder configured to detect a manipulation of the knob ring and a knob encoder configured to detect a manipulation of the knob handle, and a power level set through a manipulation detected by the knob encoder and a timer time set through the manipulate of the knob handle may be displayed on the display.

For smooth operation of the knob handle and the knob ring, the knob assembly may further include an actuating member coupled to the knob ring, a support frame coupled to the front panel and configured to support an outer circumferential surface of the actuating member, and a fixing frame coupled to the support frame and configured to prevent the actuating member from escaping from the support frame.

The knob ring supports the adjustment shaft at two or more positions thereof. The knob ring may include a knob ring main body configured to form an exterior appearance thereof, a rear surface plate coupled to a rear surface of the knob ring main body and provided with a support hole configured to support the adjustment shaft passing through the support hole, and a support pipe coupled to the rear surface plate and configured to support the adjustment shaft. The support pipe includes a flange coupled to the rear surface plate, and a tapered pipe formed to extend from the flange and provided with a support part or support configured to support the adjustment shaft.

For reducing friction when the knob ring is manipulated, the knob assembly may further include a circular plate inserted between the knob ring and the front panel, and a bearing shell provided with a cylinder which may be inserted between the actuating member and the support frame.

## Claims

1. A knob assembly for a cooking apparatus, comprising:
a knob (110) coupled to an adjustment shaft (194) for adjusting a power level of a power source;
a knob ring (120) rotatable independently of the knob (110), wherein the knob ring (120) surrounds the knob (110) and supports the adjustment shaft (194) at two or more points thereof;
wherein the knob ring (120) includes:
a knob ring main body (124) configured to form an exterior appearance thereof,
a rear surface plate (125) coupled to a rear surface of the knob ring main body (124) and provided with a support hole (125c) configured to support the adjustment shaft (194) which passes through the support hole (125c), and
a support pipe (126) coupled to the rear surface plate (125) and configured to support the adjustment shaft (194); **characterized in that** a display (123) is provided on the knob ring (120); and
wherein the support pipe (126) includes:
a flange (126a) coupled to the rear surface plate (125), and
a tapered pipe (126b) formed to extend from the flange (126a) and provided with a cap (126c) configured to support the adjustment shaft (194).

2. The knob assembly of claim 1, wherein the rear surface plate (125) is provided with a rear surface plate body and a support plate (125b) configured to protrude toward an inner side of the cooking apparatus (10), and the support hole (125c) is provided at or in the support plate (125b).

3. The knob assembly of claim 1 or 2, wherein an actuating member (150) is coupled to a rear surface of the knob ring (120) and configured to integrally rotate with the knob ring (120).

4. The knob assembly of claim 3, wherein a rotational center of the actuating member (150) coincides with an axial center of the adjustment shaft (194).

5. The knob assembly of claim 3 or 4, further comprising a support frame (140) which is configured to be coupled to a front panel (c) of the cooking apparatus and rotatably supports the knob ring (120).

6. The knob assembly of claim 5, wherein the support frame (140) is provided with a guide recess corresponding to an outer diameter of the actuating member (150) coupled to the knob ring (120).

7. The knob assembly according to any one of claims 3 to 6, wherein a front end of the actuating member (150) is formed in a cylindrical shape.

8. The knob assembly according to any one of claims 3 to 7, further comprising a knob ring encoder (e2) provided around the actuating member (150) to sense the rotation thereof.

9. The knob assembly according to any one of claims 5 to 8, further comprising a fixing frame (160) coupled to the support frame (140) and configured to prevent the actuating member (150) from escaping from the support frame (140) by passing through a rear surface of the actuating member (150).

10. The knob assembly of claim 9, wherein the fixing frame (160) is configured to confine a rotational range of the actuating member (150).

11. The knob assembly of claim 9 or 10, wherein the actuating member (150) includes an actuating member body (154) and a wing part 153 that extends out to one side, and a rotation range of the wing part (153) is restricted by the fixing frame (160).

12. The knob assembly of claim 11, wherein a pair of wing parts (153) are provided at both sides of the actuating member (150), and the fixing frame (160) equally restricts the rotational ranges thereof.

13. A cooking apparatus comprising the knob assembly according to any one of the preceding claims.

## Patentansprüche

1. Drehknopfanordnung für ein Kochgerät, die Folgendes umfasst:
einen Drehknopf (110), der mit einer Stellwelle (194) zum Einstellen einer Leistungsstufe einer Leistungsquelle gekoppelt ist;
einen Drehknopfring (120), der unabhängig vom Drehknopf (110) gedreht werden kann, wobei der Drehknopfring (120) den Drehknopf (110) umgibt und die Stellwelle (194) an zwei oder mehr Punkten trägt;
wobei der Drehknopfring (120) Folgendes umfasst:
einen Drehknopfring-Hauptkörper (124), der konfiguriert ist, ein äußeres Erscheinungsbild zu bilden,
eine rückseitige Platte (125), die mit einer Rückseite des Drehknopfring-Hauptkörpers (124) gekoppelt ist und mit einem Lagerloch (125c) versehen ist, das konfiguriert ist, die Stellwelle (194), die durch das Lagerloch (125c) verläuft, zu tragen, und
ein Tragrohr (126), das mit der rückseitigen Platte (125) gekoppelt ist und konfiguriert ist, die Stellwelle (194) zu tragen;
**dadurch gekennzeichnet, dass** eine Anzeige (123) am Drehknopfring (120) vorgesehen ist; und
wobei das Tragrohr (126) Folgendes umfasst:
einen Flansch (126a), der mit der rückseitigen Platte (125) gekoppelt ist, und
ein konisch zulaufendes Rohr (126b), das so ausgebildet ist, dass es sich vom Flansch (126a) erstreckt und mit einer Kappe (126c) versehen ist, die konfiguriert ist, die Stellwelle (194) zu tragen.

2. Drehknopfanordnung nach Anspruch 1, wobei die rückseitige Platte (125) mit einem rückseitigen Plattenkörper und mit einer Tragplatte (125b), die so konfiguriert ist, dass sie zum Inneren des Kochgeräts (10) vorsteht, versehen ist, und wobei das Lagerloch (125c) an oder in der Tragplatte (125b) vorgesehen ist.

3. Drehknopfanordnung nach Anspruch 1 oder 2, wobei ein Betätigungselement (150) mit einer Rückseite des Drehknopfrings (120) gekoppelt ist und so konfiguriert ist, dass es sich einteilig mit dem Drehknopfring (120) dreht.

4. Drehknopfanordnung nach Anspruch 3, wobei das Drehzentrum des Betätigungselements (150) mit dem axialen Zentrum der Stellwelle (194) zusammenfällt.

5. Drehknopfanordnung nach Anspruch 3 oder 4, die ferner einen Tragrahmen (140) umfasst, der so konfiguriert ist, dass er mit einer Frontplatte (c) des Kochgeräts gekoppelt wird und den Drehknopfring (120) drehbar trägt.

6. Drehknopfanordnung nach Anspruch 5, wobei der Tragrahmen (140) mit einer Führungsaussparung versehen ist, die einem Außendurchmesser des Betätigungselements (150), das mit dem Drehknopfring (120) gekoppelt ist, entspricht.

7. Drehknopfanordnung nach einem der Ansprüche 3 bis 6, wobei ein vorderes Ende des Betätigungselements (150) in einer zylindrischen Form ausgebildet ist.

8. Drehknopfanordnung nach einem der Ansprüche 3 bis 7, die ferner einen Drehknopfring-Drehwertgeber (e2) umfasst, der um das Betätigungselement (150) vorgesehen ist, um dessen Drehung zu erfassen.

9. Drehknopfanordnung nach einem der Ansprüche 5 bis 8, die ferner einen Fixierrahmen (160) umfasst, der mit dem Tragrahmen (140) gekoppelt ist und konfiguriert ist, zu verhindern, dass das Betätigungselement (150) den Tragrahmen (140) verlässt, indem er durch die Rückseite des Betätigungselements (150) verläuft.

10. Drehknopfanordnung nach Anspruch 9, wobei der Fixierrahmen (160) so konfiguriert ist, dass er einen Drehbereich des Betätigungselements (150) begrenzt.

11. Drehknopfanordnung nach Anspruch 9 oder 10, wobei das Betätigungselement (150) einen Betätigungselementkörper (154) und ein Flügelteil (153), das sich zu einer Seite nach außen erstreckt, umfasst und wobei ein Drehbereich des Flügelteils (153) durch den Fixierrahmen (160) begrenzt ist.

12. Drehknopfanordnung nach Anspruch 11, wobei ein Paar Flügelteile (153) auf beiden Seiten des Betätigungselements (150) vorgesehen ist und wobei der Fixierrahmen (160) deren Drehbereiche gleichermaßen begrenzt.

13. Kochgerät, das die Drehknopfanordnung nach einem der vorhergehenden Ansprüche umfasst.

## Revendications

1. Ensemble de bouton pour un appareil de cuisson, comportant :
un bouton (110) couplé à une tige de réglage (194) pour régler un niveau d'énergie d'une source d'énergie ;
une bague de bouton (120) pouvant tourner indépendamment du bouton (110), dans lequel la bague de bouton (120) entoure le bouton (110) et supporte la tige de réglage (194) en deux points de celle-ci ou plus ;
dans lequel la bague de bouton (120) inclut :
un corps principal de bague de bouton (124) configuré pour former un aspect extérieur de celui-ci,
une plaque de surface arrière (125) couplée à une surface arrière du corps principal de bague de bouton (124) et pourvue d'un trou de support (125c) configuré pour supporter la tige de réglage (194) qui passe à travers le trou de support (125c), et
un tube de support (126) couplé à la plaque de surface arrière (125) et configuré pour supporter la tige de réglage (194) ; **caractérisé en ce qu'**un affichage (123) est prévu sur la bague de bouton (120) ; et
dans lequel le tube de support (126) inclut :
une bride (126a) couplée à la plaque de surface arrière (125), et
un tube conique (126a) formé pour s'étendre à partir de la bride (126a) et pourvu d'une coiffe (126c) configurée pour supporter la tige de réglage (194).

2. Ensemble de bouton selon la revendication 1, dans lequel la plaque de surface arrière (125) est pourvue d'un corps de plaque de surface arrière et d'une plaque de support (125b) configurée pour faire saillie vers un côté intérieur de l'appareil de cuisson (10), et le trou de support (125c) est ménagé sur ou dans la plaque de support (125b).

3. Ensemble de bouton selon la revendication 1 ou 2, dans lequel un élément d'actionnement (150) est couplé à une surface arrière de la bague de bouton (120) et configuré pour tourner solidairement de la bague de bouton (120).

4. Ensemble de bouton selon la revendication 3, dans lequel un centre de rotation de l'élément d'actionnement (150) coïncide avec un centre axial de la tige de réglage (194).

5. Ensemble de bouton selon la revendication 3 ou 4, comportant en outre une armature de support (140) qui est configurée pour être couplée à un panneau avant (c) de l'appareil de cuisson et supporte la bague de bouton (120) en rotation.

6. Ensemble de bouton selon la revendication 5, dans lequel l'armature de support (140) est pourvue d'un évidement de guidage correspondant à un diamètre extérieur de l'élément d'actionnement (150) couplé à la bague de bouton (150).

7. Ensemble de bouton selon l'une quelconque des revendications 3 à 6, dans lequel une extrémité avant de l'élément d'actionnement (150) est formée avec une forme cylindrique.

8. Ensemble de bouton selon l'une quelconque des revendications 3 à 7, comportant en outre un codeur de bague de bouton (e2) agencé autour de l'élément d'actionnement (150) pour détecter la rotation de celui-ci.

9. Ensemble de bouton selon l'une quelconque des revendications 5 à 8, comportant en outre une armature de fixation (160) couplée à l'armature de support (140) et configurée pour empêcher l'élément d'actionnement (150) de s'échapper de l'armature de support (140) en passant à travers une surface arrière de l'élément d'actionnement (150).

10. Ensemble de bouton selon la revendication 9, dans lequel l'armature de fixation (160) est configurée pour confiner une amplitude de rotation de l'élément d'actionnement (150).

11. Ensemble de bouton selon la revendication 9 ou 10, dans lequel l'élément d'actionnement (150) inclut un corps d'élément d'actionnement( 154) et une partie d'aile (153) qui s'étend à l'extérieur jusqu'à un côté, et une amplitude de rotation de la partie d'aile (153) est restreinte par l'armature de fixation (160).

12. Ensemble de bouton selon la revendication 11, dans lequel deux parties d'aile (153) sont agencées des deux côtés de l'élément d'actionnement (150), et l'armature de fixation (160) restreint de façon égale les amplitudes de rotation de celui-ci.

13. Appareil de cuisson comportant l'ensemble de bouton selon l'une quelconque des revendications précédentes.
